# EUROPEAN PATENT SPECIFICATION

(11) **EP 2 745 380 B1**
(45) Date of publication and mention of the grant of the patent: **03.01.2018**
(21) Application number: 11876426.5
(22) Date of filing: 30.11.2011
(51) Int. Cl.: H04L 12/26

(54) **DIAGNOSIS OF COMMUNICATION BASED ON THE GOOSE PROTOCOL**
DIAGNOSE DER KOMMUNIKATION BASIERED AUF DAS GOOSE PROTOKOLL
DIAGNOSTIC DE COMMUNICATION BASÉ SUR LE PROTOCOLE GOOSE

(43) Date of publication of application: 25.06.2014
(73) Proprietor: ABB Schweiz AG, 5400 Baden (CH)
(72) Inventor: FU, Haiming, Beijing 100012 (CN); CUI, Chun, Fujian 361006 (CN); XIANG, Qianliang, Beijing 100021 (CN); LIU, Shengchen, Fujian 361000 (CN)
(74) Representative: Zimmermann & Partner Patentanwälte mbB
(86) International application number: PCT/CN2011/083266
(87) International publication number: WO 2013/078653

(56) References cited:
- EP-A1- 2 157 732
- EP-A1- 2 362 577
- WO-A1-2011/011913
- CN-A- 101 566 641
- CN-A- 102 142 720
- US-A1- 2009 300 165

## Description

### FIELD OF THE INVENTION

Embodiments of the present invention generally relate to a process control (PC) system. More particularly, embodiments of the present invention relate to a method, an apparatus, a system, and a computer program product for diagnosing Generic Object Oriented Substation Event (GOOSE) application logic for a substation automation system (SAS).

### BACKGROUND OF THE INVENTION

Substations can include primary devices such as the electrical cables, the lines, the bus bars, the switches, the power transformers and the instrument transformers, which can be arranged in switch yards and/or bays. These primary devices are operated in an automated way via a substation automation system (SAS). An exemplary SAS includes secondary devices, so-called intelligent electronic devices (IED), responsible for protection, control and monitoring of the primary devices. Logically, the structure of SAS can be divided into three hierarchical levels, i.e. the substation level, the bay level, and the process level. The IEDs may be assigned to these levels.

In general, the distributed application is necessary and important in SAS. The distributed application, such as station-wide interlock application, distributed protection coordination, etc., is accomplished through data exchange among IEDs. Data exchange among IEDs, also referred as horizontal communication, is based on peer-to-peer communication. Traditionally, the distributed application is implemented by hardwire among relevant IEDs, and transfer of data is performed through special input/output (I/O) cards in the IEDs.

With the introduction of international standard IEC61850, the digital substation has developed rapidly and becomes a trend in the SAS design. The digital substation adopts Industrial Ethernet network as the fundamental communication bus across the whole application domain. For time-critical event-based messages, IEC61850 specifies the Generic Object Oriented Substation Event (GOOSE) directly on the Ethernet link layer of the communication stack. GOOSE is a mechanism which provides rapid and reliable data exchange among IEDs based on peer-to-peer communication on Industrial Ethernet network. Accordingly, the GOOSE becomes an important approach to implement the above mentioned distributed application.

GOOSE has many advantages, including, for example, reducing wiring, more reliability, real-time, more capacity and more diverse and complicated signals, and easy for maintenance.
Document CN 102 142 720 A discloses a device for performing a low-level system and network communication analysis in a substation automation system.
Document EP 2 362 577 A1 discloses an analysis of operations in a substation which makes use of GOOSE events. A link between a sender and a receiver is visualized by analyzing information pertaining to MMS, GOOSE and SV in an SCD configuration file.
However, since the signal transmitted in the GOOSE network is virtual and invisible, it is difficult to diagnose and analyze it when exceptional case happens. Thus, the technologies for diagnosing and/or analyzing the GOOSE communication are needed.

### SUMMARY OF THE INVENTION

It is said that there are some tools or documents involving the method for diagnosis the GOOSE communication. However, those methods merely diagnose the exceptional transmission behaviors of the GOOSE message, such as connection interrupt, loss, storm, and transmission performance of the GOOSE message, and cannot solve the problem of diagnosing the logic of the distributed application implemented based on GOOSE (GOOSE-based distributed application for short) on the application layer.

Therefore, it would be desirable in the art to provide a feasible way for diagnosing the logic of a GOOSE-based distributed application. It would also be desirable to provide a way for analyzing the logic of a GOOSE-based distributed application when exceptional case happens.

To better address one or more of the concerns, in a first aspect of the invention, a method of diagnosis for logic of a distributed application of a process control system is provided, wherein the distributed application is implemented based on Generic Object Oriented Substation Event (GOOSE). The method comprises: creating at least one logic diagnosis module based on a data model for the distributed application; obtaining GOOSE signal information; and executing the at least one logic diagnosis module based on the GOOSE signal information, wherein obtaining the GOOSE signal information comprises capturing online GOOSE packets on a network in the process control system to obtain the GOOSE signal information; or receiving offline recorded GOOSE packets of the process control system to obtain the GOOSE signal information.

In one embodiment, the at least one logic diagnosis module may be implemented as a script, for example, an executable script. In another embodiment, the at least one logic diagnosis module may be implemented as a Programmable Logic Controller (PLC).

In some embodiments, the data model is obtained from configuration file(s) of the process control system. Further, the configuration description file(s) are selected from a group consisted of SCD file, CID file and ICD file.

In one embodiment, executing the at least one logic diagnosis module comprises assigning the GOOSE signal information to the data model. In another embodiment, executing the at least one logic diagnosis module comprises assigning the GOOSE signal information to the logic diagnosis module.

In a further embodiment, executing the at least one logic diagnosis module comprises executing manually or automatically by cycle or a GOOSE event trigger during a test or a commission or an operation of the process control system.

Additionally, the method may further comprise: recording information related to the executing; and analyzing the information when an exceptional case happens. The information may comprise at least one of GOOSE raw packets, Intelligent Electronic Device (IED) information, GOOSE control block information, GOOSE dataset, GOOSE signal event of sequence and the diagnosis result.

In yet another embodiment, the method may further comprise issuing an alarm when an exceptional case happens.

In embodiments of the present invention, the process control system may be selected from a group consisted of a Substation Automation System, a hydro power plant, a wind power system, and a distributed energy resources system.

In a second aspect of the invention, an apparatus of diagnosis for logic of a distributed application of a process control system is provided, wherein the distributed application is implemented based on Generic Object Oriented Substation Event (GOOSE). The apparatus comprises: a creating means configured to create at least one logic diagnosis module based on a data model for the distributed application; an obtaining means configured to obtain GOOSE signal information; and an executing means configured to execute the at least one logic diagnosis module based on the GOOSE signal information, wherein the obtaining means comprises a capturing means configured to capture online GOOSE packets on a network in the process control system to obtain the GOOSE signal information; or a receiving means configured to receive offline recorded GOOSE packets of the process control system to obtain the GOOSE signal information.

In a third aspect of the invention, a system of diagnosis for logic of a distributed application of a process control system is provided, wherein the distributed application is implemented bases on Generic Object Oriented Substation Event (GOOSE). The system comprises at least one processor and at least one memory including computer program instructions adapted to perform the method of diagnosis for logic of a distributed application of a process control system as disclosed herein.

In a fourth aspect of the invention, a computer program product of diagnosis for logic of a distributed application of a process control system is provided, wherein the distributed application is implemented based on Generic Object Oriented Substation Event (GOOSE). The computer program product comprises at least one computer readable storage medium having computer readable program instructions stored therein. The computer readable program instructions comprises computer program instructions adapted to perform the method of diagnosis for logic of a distributed application of a process control system as disclosed herein.

Particular embodiments of the subject matter described in this specification can be implemented so as to realize one or more of the following advantages.

With particular embodiments of the techniques described in this specification, it is easy to diagnose the GOOSE-based distributed application logic interaction between GOOSE signals from different IEDs for distributed application function using horizontal communication. Further, it is easy to configure logic diagnosis module that cover any distributed application case or any process control system. In addition, the GOOSE-based distributed application logic can be diagnosed online without interrupting the normal operation. Further, the GOOSE-based distributed application logic may be diagnosed offline. Moreover, by recording and analyzing the diagnosis result, it is easy to know the exact exceptional case.

Other features and advantages of the embodiments of the present invention will also be understood from the following description of specific embodiments when read in conjunction with the accompanying drawings, which illustrate, by way of example, the principles of embodiments of the present invention.

### BRIEF DESCRIPTION OF THE DRAWINGS

The embodiments of the invention that are presented in the sense of examples and their advantages are explained in greater detail below with reference to the accompanying drawings, in which:
Fig. 1 is a schematic diagram of the digital substation automation system;
Fig. 2 is a flow chart schematically illustrating a method of diagnose for logic of a GOOSE-based distributed application according to an embodiment of the present invention;
Fig. 3 is a schematic block diagram of an apparatus of diagnosis for logic of a GOOSE-based distributed application according to an embodiment of the present invention;
   and
Fig. 4 is a schematic block diagram of a computer system in which embodiments of the present invention may be practiced.

Like reference numbers and designations in the various drawings indicate like elements.

### DETAILED DESCRIPTION OF EMBODIMENTS

Hereinafter, the principle and spirit of the present invention will be described with reference to the illustrative embodiments. It should be understood, all these embodiments are given merely for the skilled in the art to better understand and further practice the present invention, but not for limiting the scope of the present invention.

As mentioned above, the GOOSE is an important approach to implement various distributed applications. For convenience, as used herein, the term "a GOOSE-based distributed application," "a GOOSE-based application," "a GOOSE distributed application," or "a GOOSE application" may be used interchangeably to refer to one distributed application or a combination of two or more distributed applications implemented based on the GOOSE. The term "GOOSE-based distributed application logic," "GOOSE-based application logic," or "GOOSE application logic", as used herein, may be interchangeably refer to the logic of a distributed application implemented based on the GOOSE.

The digital SAS is given as an example for illustrating the principles and spirits of the invention. However, principles and spirits of the present invention are not restricted to a use in substation automation system, but are likewise applicable to, for example, other process control system with a standardized configuration description. For example, IEC61850 is also an accepted standard for the hydro power plants, the wind power systems, and the distributed energy resources (DER).

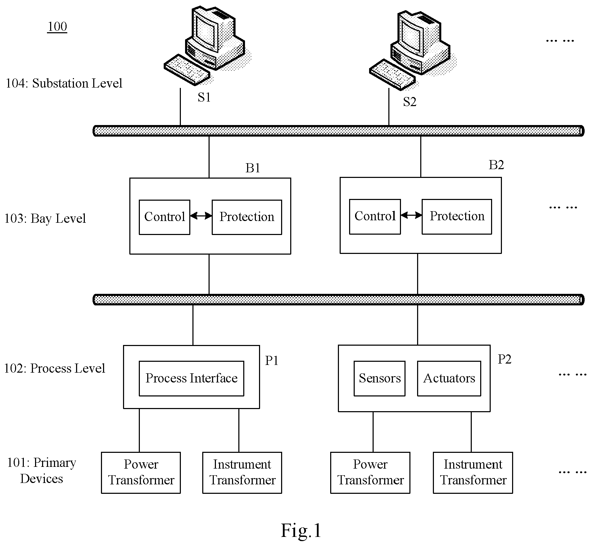

Fig. 1 illustrates the schematic diagram of the structure of the digital substation automation system (SAS) 100.

As shown in Fig. 1, the digital SAS 100 is hierarchically constructed with intelligent primary devices 101 and networking secondary devices (so-called intelligent electronic device IED). According to the standard of IEC61850, SAS 100 is logically divided into the process level 102, the bay level 103, and the substation level 104. The IEDs may be assigned to the three levels. Fig. 1 exemplarily illustrates that the SAS 100 includes one or more station IEDs S1, S2, one or more bay IEDs B1, B2, and one or more process IEDs P1, P2.

GOOSE is a mechanism in the standard of IEC61850 for fulfilling the demand of fast message. It realizes high reliable and real-time communication among IEDs. In addition to transmitting real-time trip signal, bay logic interlocking, and synchrochecking, etc. GOOSE already is a very important part in SAS for the distributed application function.

However, GOOSE test so far is only done during commission, and it is hard to cover all cases onsite due to the test simulation limitation. In addition, GOOSE test strongly depends on the tester's experience and skill. Sometimes, the distributed logic test is completed hardly manually. Particularly, it is difficult for a user to know the exact exceptional case when GOOSE application logic case is exceptional during a SAS operation. For example, the user is hard to know when the exceptional case happened, what happened, how the performance is, and how to record the exception for the fault analysis.

In the following, a pair of logic signals for distributed trip application, i.e., the trip and the position, is taken as an example to illustrate the above problem. In this example, supposing there are two IEDs, IED A and IED B. The trip signal is from IED A to IED B, while the position signal is from IED B to IED A. The trip and the position are already a pair of logic link, which have been predefined in SAS configuration file.

In a normal case, the position signal should be changed to open status with a right delay when the trip signal is triggered. However, certain exceptional cases may occur when there is wrong in the SAS. For example, the exceptional cases may be the following instances. The position signal can't be changed to open status in several ms after the trip signal is triggered. The position signal is in error status. According to the prior art, the user is difficult to know the exact exceptional case when the above cases occur.

To overcome the above problems, the main purpose of the present invention is to provide a feasible way for diagnosing the GOOSE-based application logic.

Hereinafter, the present invention will be described with reference to the methods, the apparatuses (systems) and the flow chart and/or block diagram of the computer program products according to the embodiments of the present invention. It should be understood that each block in the flow charts and/or block diagrams and combination of each block in the flow charts and/or block diagrams of the present invention may be implemented by computer program instructions. These computer program instructions may be provided to a processor of a general purpose computer, a special purpose computer or other programmable data processing apparatus, to thereby produce a machine such that these instructions executed through the computer or other programmable data processing apparatus create means for implementing the functions/operations prescribed in the blocks of the flow charts and/or block diagrams.

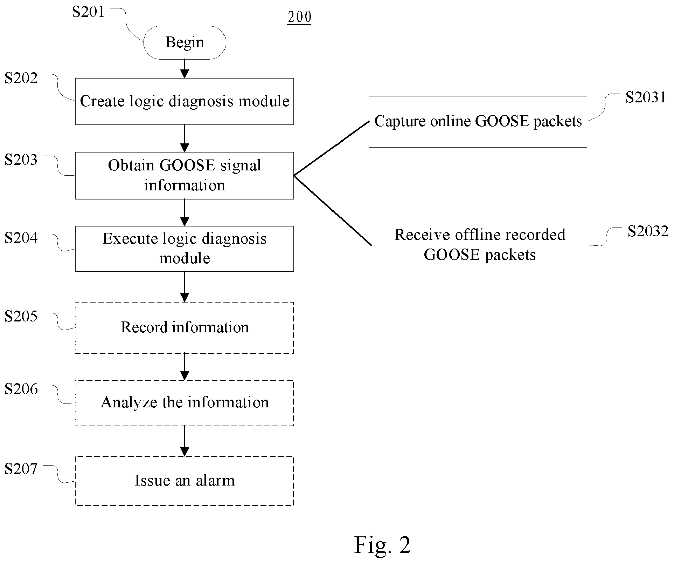

Fig. 2 is a flow chart schematically illustrating a method 200 of diagnosis for logic of a GOOSE-based application of a process control system (e.g., SAS) according to an embodiment of the present invention. As illustrated in Fig. 2, the method 200 begins at the step S201 and proceeds to the step S202 at which the method 200 creates at least one logic diagnosis module based on a data model for the GOOSE-based application.

In some embodiments, the data model may be obtained from configuration description file(s) of the process control system. Specifically, the configuration description file(s) may be imported from external devices.

For describing and configuring an SAS, a specific Substation Configuration Description Language (SCL) has been defined in IEC61850. SCL files contain GOOSE communication parameters and engineering instance data structures of SAS.

SCL files may be SCD or CID/ICD files. A Substation Configuration Description (.SCD) file is the file describing the substation configuration in details. A Configured IED Description (.CID) file is used for communication between an IED configuration tool and an IED. A IED Capability Description (.ICD) file describes data model and communication services of an IED in question. These configuration files are generated as substation configuration files after substation engineering configuration. Configuration files based on IEC61850 contain varieties of special data models, such as "Substation," "IED," and "Communication" and so on. There must be GOOSE configured information (such as the GOOSE communication parameters) in the configuration file, if any distributed application based on GOOSE is applied to the process level or the bay level or the station level.

Therefore, the imported SCL files may be used to create the logic diagnosis module. In one embodiment of the present invention, the data model may be obtained from the Communication and IED sections by parsing the SCL files. Generally, the data model may include but not limited to, the input resources and output resources of the GOOSE signals, the GOOSE control blocks, the GOOSE dataset, and the initialized GOOSE communication parameters. The data model may be buffered in the memory.

According to some embodiments, the logic diagnosis module may be created based on the engineering data model. For example, as mentioned above, the trip and the position signals are a pair of logic link. By way of example, the position signal should be changed to open status with a right delay (e.g. 50 ms) when the trip signal is triggered. Thus, an exemplary logic diagnosis module may be created based on the trip and position logic link. Specially, the exemplary logic diagnosis module may involve responding to the trigger of the trip signal, to check the position signal after 100 ms. In further embodiments of the present invention, the logic diagnosis module may be edited by an engineer to account for any application case that would happen. As an example, the above delay time (i.e., 100 ms) may be substituted by 1s or 10s in order to consider the exceptional case that the position signal is returned back beyond the normal delay time. Creating of the logic diagnosis module depends on what the user (for example, the engineer) wants to do according to the GOOSE actual application configuration during engineering. By this way, the user may freely configure the logic diagnosis module to cover any application case.

Further, an execution rule may be defined in the logic diagnosis module. In one embodiment of the present invention, the execution rule may be defined as executing the logic diagnosis module automatically by cycle. In another embodiment of the present invention, the execution rule may be defined as executing the logic diagnosis module automatically by certain GOOSE event trigger such as the change of the GOOSE signal information. In yet another embodiment of the present invention, the execution rule may be defined as executing the logic diagnosis module manually.

In one embodiment, the logic diagnosis module may be implemented as a script, for example, an executable script. The script may be written in any form of programming language, including compiled or interpreted languages.

In another embodiment, the logic diagnosis module may be implemented as a Programmable Logic Controller (PLC). A PLC is a digital computer used for automation of electromechanical processes, such as control of machinery on factory assembly lines. The PLC is a standardized implementation for engineering automation processes. For example, IEC 61131 is an open international standard for PLCs by IEC. Thus, the skilled person in the art can easily construct a PLC based on the desired function. The detailed description about the PLC is omitted herein.

After the logic diagnosis module has been created, the method 200 may proceed to the step S203, at which GOOSE signal information may be obtained. The GOOSE signal information may be values for the GOOSE signal.

In one embodiment of the present invention, the GOOSE signal information may be obtained at the sub-step S2031, where GOOSE packets on a network of the process control system may be captured online. The captured GOOSE packets then can be decoded into the GOOSE signal information. In some embodiments of the present invention, all GOOSE packets on the network of SAS may be captured in real time. In this way, all the time the latest GOOSE signal values may be obtained for diagnosis later. The skilled in the art can understand that, GOOSE packets may be captured with any appropriate technical means of known or future developed. The scope of the present invention is not limited in this regard.

In another embodiment of the present invention, the GOOSE signal information may be obtained at the sub-step S2032, where offline recorded GOOSE packets may be imported from some external storage. Similarly, the GOOSE packets may be decoded into the GOOSE signal information.

In yet another embodiment, the GOOSE signal information may be inputted by manual.

Afterwards, the method 200 advances to the step S204, at which the method 200 executes the at least one logic diagnosis module based on the GOOSE signal information.

In one embodiment, the execution may comprise assigning the GOOSE signal information to the data model. Then, the logic diagnosis module will be executed on the data model. In another embodiment, the execution may comprise assigning the GOOSE signal information to the logic diagnosis module without accessing the data model.

In some embodiments, the execution may be performed according to the defined execution rule in the logic diagnosis script. In other words, the execution may be performed manually or automatically by cycle or a GOOSE event trigger. By way of example, considering an embodiment where the logic diagnosis module is executed by a GOOSE event trigger such as a Trip signal event. When a GOOSE packet containing a Trip signal is obtained (e.g., by capturing), the Trip signal is derived by decoding the GOOSE packet and then is written into the data model in the memory or is inputted to the logic diagnosis module as created in the step S202. Responding to the change of the Trip signal, the exemplary diagnosis module is triggered to perform diagnosis for the distributed Trip application. For example, according to the logic diagnosis module, a corresponding Position signal event will be read out after 100 ms by the logic diagnosis module and the value of the Position signal event will be compared with a reference value to determine whether the GOOSE application logic is correct. In some embodiments, the execution may be performed during the SAS test or the commission or the operation of the control system. In some embodiments, results based on the logic diagnosis module are given automatically or by request for who care about the information, e.g. the end-user or the engineer etc.

Optionally, the method 200 may further comprise the step S205. At the step S205, the information related to the execution of the logic diagnosis module is recorded. The step of recording may be triggered by the diagnosis result to record the related information to a file or a historical database. Such information may comprise, for example but not limited to, the GOOSE raw packets, the IED information, the GOOSE control block information, the GOOSE dataset, the GOOSE signal event of sequence, and the diagnosis result.

Upon an exceptional case happens, the method 200 may further comprise the step S206, at which, analysis may be performed on the execution result, for example, from the recorded information. In one embodiment of the present invention, the GOOSE transmission performance may also be analyzed.

Additionally, the method 200 may comprise the step S207 of issuing an alarm when an exceptional case happens. The alarm may be signals in any form, such as audible, visible, or sensible signals.

A method of diagnosis for logic of a GOOSE-based distributed application according to embodiments of the present invention has been described above. It should be noted that the above depiction is only exemplary and not intended for limiting the present invention. In other embodiments of the present invention, this method may have more, or less, or different steps, and the sequence of respective steps may also be different from the depiction. For example, in some embodiments, the above one or more optional steps may be omitted. In some embodiments, the step S203 may occur prior to the step S202 or in parallel with the step S202. Specific embodiment of each step may be different from the depiction. All these variations fall within the spirit and scope of the present invention.

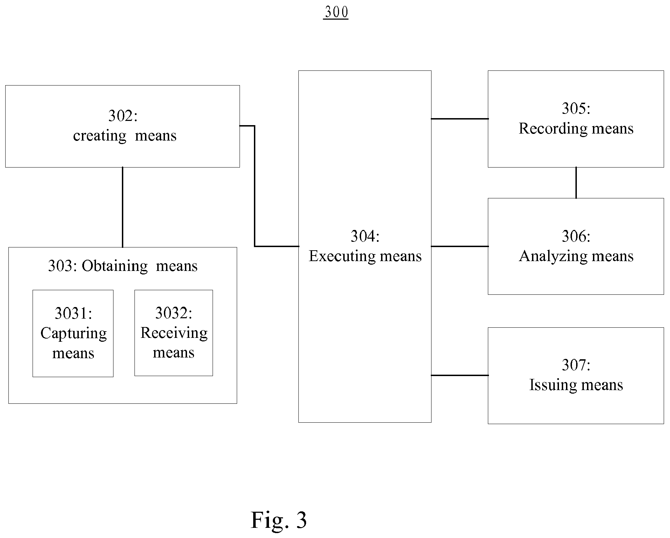

Fig. 3 is a schematic block diagram of an apparatus 300 of diagnosis for logic of a GOOSE-based distributed application of a process control system (e.g., SAS) according to an embodiment of the present invention.

As illustrated in Fig. 3, the apparatus 300 may comprise: a creating means 302 configured to create at least one logic diagnosis module based on a data model for the distributed application; an obtaining means 303 configured to obtain GOOSE signal information; and an executing means 305 configured to execute the at least one logic diagnosis module based on the GOOSE signal information.

In some embodiments of the present invention, the data model may be obtained from configuration description file(s) of the process control system. Further, the configuration description files are SCL files defined in the standard of IEC61850, which may be SCD or CID/ICD files. There configuration files are generated after the engineering configuration of the process control system, and thus the data model may be an engineering data model. In one embodiment of the present invention, the configuration description file(s) may be imported from an external device.

In some embodiments of the present invention, the data model may be obtained from the Communication and IED sections by parsing the SCL files. The data model may be buffered in the memory.

In some embodiments of the present invention, the creating means 302 may be configured to create the logic diagnosis module based on the engineering data model. Specifically, the logic diagnosis module is created according to what the user (e.g., the engineer) wants to do according to the GOOSE actual application configuration during engineering.

In some embodiments, the creating means 302 may be configured to define an execution rule in the logic diagnosis module. For example, the execution rule may be defined as executing the logic diagnosis module manually or automatically by cycle or by certain GOOSE event trigger such as the change of the GOOSE signal information.

In one embodiment, the logic diagnosis module may be implemented as a script, for example, an executable script. The script may be written in any form of programming language, including compiled or interpreted languages. In another embodiment, the logic diagnosis module may be implemented as a Programmable Logic Controller (PLC).

In one embodiment of the present invention, the obtaining means 303 may comprise a capturing means 3031, which is configured to capture online GOOSE packets on a network in the process control system. Then, the GOOSE packets can be decoded into the GOOSE signal information which will be assigned to the data model in the memory or to the logic diagnosis module. Because the capturing means 3031 captures the GOOSE packets in real time, all the time the latest GOOSE signal values may be obtained continuously for diagnosis.

In another embodiment of the present invention, the obtaining means 303 may comprise a receiving means 3032, which is configured to receive offline recorded GOOSE packets of the process control system. Similarly, the GOOSE packets can be decoded into the GOOSE signal information.

The processor control system may be selected from a group consisted of a Substation Automation System (SAS), a hydro power plant, a wind power system, and a distributed energy resources system. The processor control system complies with the standard of IEC61850. The configuration description files may be SCL files, e.g., SCD or CID/ICD files.

In some embodiments of the present invention, the executing means 304 may comprise an assigning means configured to assign the GOOSE signal information to the data model or to the logic diagnosis module. In some embodiments of the present invention, the executing means 304 may be configured to execute the logic diagnosis module manually or automatically by cycle or a GOOSE event trigger. In some embodiments of the present invention, the executing means 305 may be configured to execute during the test or the commission or the operation of the process control system. In some embodiments, results based on the logic diagnosis module are given automatically or by request for who care about the information, e.g. the end-user or the engineer etc.

Optionally, the apparatus 300 may further comprise a recording means 305, an analyzing means 306 and an issuing means 307.

The recording means 305 is configured to record information related to the execution. In some embodiments of the present invention, the recording means 305 may be triggered by the diagnosis result to record related information to a file or a historical database. Such information may comprise, for example but not limited to, the GOOSE raw packets, the IED information, the GOOSE control block information, the GOOSE dataset, the GOOSE signal event of sequence and the diagnosis result.

The analyzing means 306 may be configured to analyze the execution result, for example, based on the recorded information. Alternatively, the analyzing means 306 may receive the related information directly from the executing means 304. In one embodiment of the present invention, the analyzing means 306 may be further configured to analyze the GOOSE transmission performance.

The issuing means 307 may be configured to issue an alarm when an exceptional case happens. The alarm may be signals in any form, such as audible, visible, or sensible signals.

In should be understood, each of the modules 301-307 contained in the apparatus 300 corresponds to each step of the method 200 illustrated in Fig. 2. Thus, the operations and features described above with reference to the method 200 also apply to the apparatus 300 and the modules therein, and the detailed description thereof is omitted here.

It should be appreciated that, the partition of the above modules in the apparatus 300 is exemplarily, but not restrictive. For example, the function of a single module in the above description may be realized by multiple modules. Vice versa, the multiple modules described above may also be realized by a single module. The scope of the present invention is not limited in this regard.

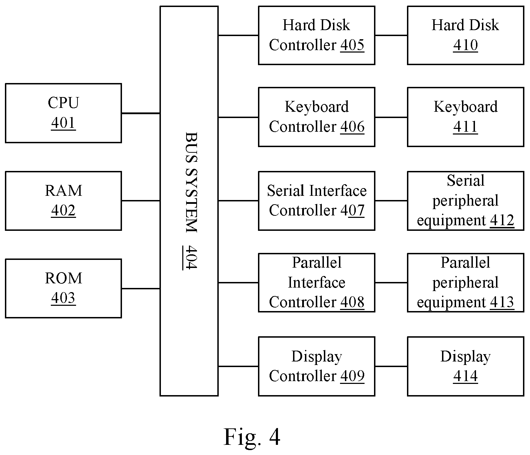

Fig. 4 is a schematic block diagram of a computer system in which embodiments of the present invention may be practiced.

The computer system as shown in Fig. 4 comprises a CPU (Central Processing Unit) 401, a RAM (Random Access Memory) 402, a ROM (Read Only Memory) 403, a system bus 404, a hard disk controller 405, a keyboard controller 406, a serial interface controller 407, a parallel interface controller 408, a display controller 409, a hard disk 410, a keyboard 411, a serial peripheral device 412, a parallel peripheral device 413 and a display 414. Among these components, connected to the system bus 404 are the CPU 401, the RAM 402, the ROM 403, the hard disk controller 403, the keyboard controller 405, the keyboard controller 406, the serial interface controller 407, the parallel interface controller 408 and the display controller 409. The hard disk 410 is connected to the hard disk controller 405; the keyboard 411 is connected to the keyboard controller 406; the serial peripheral device 412 is connected to the serial interface controller 407; the parallel peripheral device 413 is connected to the parallel interface controller 408; and the display 414 is connected to the display controller 409.

The structural block diagram in Fig. 4 is shown only for illustration purpose, and is not intended to limit the invention. In some cases, some devices can be added or reduced as required.

The skilled in the art should appreciate that the present invention may be embodied as a system, method or computer program product. Accordingly, the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present invention may take the form of a computer program product embodied in any tangible medium of expression having computer-usable program code embodied in the medium.

The flowcharts and block diagrams in the Figures illustrate the architecture, functionality, and operations of possible implementations of the systems, the methods and the computer program products according to various embodiments of the present invention. In this regard, each block in the flowcharts or block diagrams may represent a module, a program segment, or a portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowcharts, and combinations of blocks in the block diagrams and/or flowcharts, can be implemented by special purpose hardware-based systems that perform the specified functions or operations, or combinations of special purpose hardware and computer instructions.

While this specification contains many specific implementation details, these should not be construed as limitations on the scope of any implementation or of what may be claimed, but rather as descriptions of features that may be specific to particular embodiments of particular implementations. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Particular embodiments of the subject matter described in this specification have been described. Other embodiments are within the scope of the appended claims. For example, the actions recited in the claims can be performed in a different order and still achieve desirable results. As one example, the processes depicted in the accompanying figures do not necessarily require the particular order shown, or sequential order, to achieve desirable results. In certain implementations, multitasking and parallel processing may be advantageous.

## Claims

1. A method of diagnosis for logic of a distributed application of a process control system, wherein the distributed application is implemented based on Generic Object Oriented Substation Event, GOOSE, the method comprising:
creating at least one logic diagnosis module (S202) based on a data model for the distributed application;
obtaining GOOSE signal information (S203); and
executing the at least one logic diagnosis module (S204) based on the GOOSE signal information, **characterized in that** the obtaining the GOOSE signal information comprises:
capturing online GOOSE packets (S2031) on a network in the process control system to obtain the GOOSE signal information; or
receiving offline recorded GOOSE packets (S2032) of the process control system to obtain the GOOSE signal information.

2. The method of claim 1, wherein the at least one logic diagnosis module is implemented as a script or as a Programmable Logic Controller (PLC), and the data model is obtained from configuration description file(s) of the process control system.

3. The method of claim 1 or 2, wherein executing the at least one logic diagnosis module comprises:
assigning the GOOSE signal information to the data model or to the at least one logic diagnosis module.

4. The method of claim 1 or 2, wherein executing the at least one logic diagnosis module comprises:
executing the at least one logic diagnosis module manually or automatically by cycle or a GOOSE event trigger during a test or a commission or an operation of the process control system.

5. The method of claim 1 or 2, further comprising:
recording information related to the executing; and
analyzing the information when an exceptional case happens.

6. The method of claim 5, wherein the information comprises at least one of GOOSE raw packets, Intelligent Electronic Device (IED) information, GOOSE control block information, GOOSE dataset, GOOSE signal event of sequence and the diagnosis result.

7. The method of claim 1 or 2, wherein the process control system is selected from a group consisted of a Substation Automation System, a hydro power plant, a wind power system, and a distributed energy resources system.

8. An apparatus of diagnosis for logic of a distributed application of a process control system, wherein the distributed application is implemented based on Generic Object Oriented Substation Event, GOOSE, the apparatus comprising:
a creating means configured to create at least one logic diagnosis module (S202) based on a data model for the distributed application;
an obtaining means configured to obtain GOOSE signal information (S203); and
an executing means configured to execute the at least one logic diagnosis module (S204) based on the GOOSE signal information, **characterized in that** the obtaining means comprises:
a capturing means configured to capture online GOOSE packets (S2031) on a network in the process control system to obtain the GOOSE signal information; or
a receiving means configured to receive offline recorded GOOSE packets (S2032) of the process control system to obtain the GOOSE signal information.

9. The apparatus of claim 8, wherein the at least one logic diagnosis module is implemented as a script or as a Programmable Logic Controller (PLC), and the data model is obtained from configuration description file(s) of the process control system.

10. The apparatus of claim 8 or 9, wherein the executing means comprises:
an assigning means configured to assign the GOOSE signal information to the data model or to the at least one logic diagnosis module.

11. The apparatus of claim 8 or 9, wherein the executing means is further configured to:
execute the at least one logic diagnosis module manually or automatically by cycle or a GOOSE event trigger during a test or a commission or an operation of the process control system.

12. A system of diagnosis for logic of a distributed application of a process control system, wherein the distributed application is implemented based on Generic Object Oriented Substation Event, GOOSE, the system comprising at least one processor and at least one memory including computer program instructions adapted to perform the method according to any one of claims 1 to 7.

13. A computer program product of diagnosis for logic of a distributed application of a process control system, wherein the distributed application is implemented based on Generic Object Oriented Substation Event, GOOSE, the computer program product comprising at least one computer readable storage medium having computer readable program instructions stored therein, the computer readable program instructions comprising program instructions adapted to perform the method according to any one of claims 1 to 7.

## Patentansprüche

1. Verfahren zur Diagnose der Logik einer verteilten Anwendung eines Prozesssteuerungssystems, wobei die verteilte Anwendung auf Grundlage von Generic Object Oriented Substation Event, GOOSE, implementiert wird, wobei das Verfahren umfasst:
Erzeugen mindestens eines Logikdiagnosemoduls (S202) auf Grundlage eines Datenmodells für die verteilte Anwendung;
Erhalten von GOOSE-Signal-Informationen (S203); und
Ausführen des mindestens einen Logikdiagnosemoduls (S204) auf Grundlage der GOOSE-Signal-Informationen,
**dadurch gekennzeichnet, dass** das Erhalten der GOOSE-Signal-Informationen umfasst:
online Erfassen von GOOSE-Paketen (S2031) in einem Netzwerk im Prozesssteuerungssystem, um die GOOSE-Signal-Informationen zu erhalten; oder
Empfangen von offline aufgezeichneten GOOSE-Paketen (S2032) des Prozesssteuerungssystems, um die GOOSE-Signal-Informationen zu erhalten.

2. Verfahren nach Anspruch 1, wobei das mindestens eine Logikdiagnosemodul als ein Skript oder als eine speicherprogrammierbare Steuerung (PLC - Programmable Logic Controller) implementiert wird, und das Datenmodell aus einer oder mehreren Konfigurationsbeschreibungsdatei/en des Prozesssteuerungssystems gewonnen wird.

3. Verfahren nach Anspruch 1 oder 2, wobei das Ausführen des mindestens einen Logikdiagnosemoduls umfasst:
Zuteilen der GOOSE-Signal-Informationen zum Datenmodell oder zu dem mindestens einen Logikdiagnosemodul.

4. Verfahren nach Anspruch 1 oder 2, wobei das Ausführen des mindestens einen Logikdiagnosemoduls umfasst:
manuelles oder automatisches Ausführen des mindestens einen Logikdiagnosemoduls zyklusabhängig oder durch einen GOOSE-Ereignis-Auslöser während eines Tests oder einer Inbetriebnahme oder eines Betriebs des Prozesssteuerungssystems.

5. Verfahren nach Anspruch 1 oder 2, darüber hinaus umfassend:
Aufzeichnen von auf das Ausführen bezogenen Informationen; und
Analysieren der Informationen, wenn ein außergewöhnlicher Fall auftritt.

6. Verfahren nach Anspruch 5, wobei die Informationen mindestens eines der folgenden umfassen: GOOSE-Rohpakete, Intelligent Electronic Device (IED)-Informationen, GOOSE-Steuerblockinformationen, einen GOOSE-Datensatz, eine Abfolge von GOOSE-Signalereignissen und das Diagnoseergebnis.

7. Verfahren nach Anspruch 1 oder 2, wobei das Prozesssteuerungssystem aus einer Gruppe ausgewählt ist, die aus einem Unterstation-Automatisierungssystem, einer Wasserkraftanlage, einer Windenergieanlage und einem verteilten Energiequellensystem besteht.

8. Vorrichtung zur Diagnose der Logik einer verteilten Anwendung eines Prozesssteuerungssystems, wobei die verteilte Anwendung auf Grundlage von Generic Object Oriented Substation Event, GOOSE, implementiert wird, wobei die Vorrichtung umfasst:
eine Erzeugungseinrichtung, die dazu ausgelegt ist, mindestens ein Logikdiagnosemodul (S202) auf Grundlage eines Datenmodells für die verteilte Anwendung zu erzeugen;
eine Erhaltungseinrichtung, die dazu ausgelegt ist, GOOSE-Signal-Informationen (S203) zu erhalten; und
eine Ausführungseinrichtung, die dazu ausgelegt ist, das mindestens eine Logikdiagnosemodul (S204) auf Grundlage der GOOSE-Signal-Informationen auszuführen,
**dadurch gekennzeichnet, dass** die Erhaltungseinrichtung umfasst:
eine Erfassungseinrichtung, um online GOOSE-Pakete (S2031) in einem Netzwerk im Prozesssteuerungssystem zu erfassen, um die GOOSE-Signal-Informationen zu erhalten; oder
eine Empfangseinrichtung, die dazu ausgelegt ist, offline aufgezeichnete GOOSE-Pakete (S2032) des Prozesssteuerungssystems zu empfangen, um die GOOSE-Signal-Informationen zu erhalten.

9. Vorrichtung nach Anspruch 8, wobei das mindestens eine Logikdiagnosemodul als ein Skript oder als eine speicherprogrammierbare Steuerung (PLC - Programmable Logic Controller) implementiert ist, und das Datenmodell aus einer oder mehreren Konfigurationsbeschreibungsdatei/en des Prozesssteuerungssystems gewonnen ist.

10. Vorrichtung nach Anspruch 8 oder 9, wobei die Ausführungseinrichtung umfasst:
eine Zuteilungseinrichtung, die dazu ausgelegt ist, dem Datenmodell oder dem mindestens einen Logikdiagnosemodul die GOOSE-Signal-Informationen zuzuteilen.

11. Vorrichtung nach Anspruch 8 oder 9, wobei die Ausführungseinrichtung darüber hinaus dazu ausgelegt ist:
das mindestens eine Logikdiagnosemodul zyklusabhängig oder durch einen GOOSE-Ereignis-Auslöser während eines Tests oder einer Inbetriebnahme oder eines Betriebs des Prozesssteuerungssystems manuell oder automatisch auszuführen.

12. System zur Diagnose der Logik einer verteilten Anwendung eines Prozesssteuerungssystems, wobei die verteilte Anwendung auf Grundlage von Generic Object Oriented Substation Event, GOOSE, implementiert wird, wobei das System mindestens einen Prozessor und mindestens einen Speicher umfasst, der Computerprogrammbefehle enthält, die dazu angepasst sind, das Verfahren nach einem der Ansprüche 1 bis 7 durchzuführen.

13. Computerprogrammprodukt zur Diagnose der Logik einer verteilten Anwendung eines Prozesssteuerungssystems, wobei die verteilte Anwendung auf Grundlage von Generic Object Oriented Substation Event, GOOSE, implementiert wird, wobei das Computerprogrammprodukt mindestens ein computerlesbares Speichermedium mit darin gespeicherten computerlesbaren Programmbefehlen umfasst, wobei die computerlesbaren Programmbefehle Programmbefehle umfassen, die dazu angepasst sind, das Verfahren nach einem der Ansprüche 1 bis 7 durchzuführen.

## Revendications

1. Procédé de diagnostic pour la logique d'une application distribuée d'un système de contrôle de processus, dans lequel l'application distribuée est mise en oeuvre sur base de l'Evénement de Sous-station Orienté sur un Objet Générique, GOOSE, le procédé comprenant:
créer au moins un module de diagnostic logique (S202) sur base d'un modèle de données pour l'application distribuée;
obtenir des informations de signal de GOOSE (S203); et
exécuter l'au moins un module de diagnostic logique (S204) sur base des informations de signal de GOOSE,
**caractérisé en ce que**
l'obtention des informations de signal de GOOSE comprend:
capturer des paquets de GOOSE en ligne (S2031) sur un réseau dans le système de contrôle de processus pour obtenir les informations de signal de GOOSE; ou
recevoir des paquets de GOOSE (S2032) enregistrés hors ligne du système de contrôle de processus pour obtenir les informations de signal de GOOSE.

2. Procédé selon la revendication 1, dans lequel l'au moins un module de diagnostic logique est mis en oeuvre comme un script ou comme un Contrôleur Logique Programmable (PLC), et le modèle de données est obtenu à partir du ou des fichiers de description de configuration du système de contrôle de processus.

3. Procédé selon la revendication 1 ou 2, dans lequel exécuter l'au moins un module de diagnostic logique comprend:
attribuer les informations de signal de GOOSE au modèle de données ou à l'au moins un module de diagnostic logique.

4. Procédé selon la revendication 1 ou 2, dans lequel exécuter l'au moins un module de diagnostic logique comprend:
exécuter manuellement ou automatiquement l'au moins un module de diagnostic logique par cycle ou par un déclencheur d'événement de GOOSE pendant un test ou une mise en marche ou un fonctionnement du système de contrôle de processus.

5. Procédé selon la revendication 1 ou 2, comprenant en outre:
enregistrer les informations relatives à l'exécution; et
analyser les informations lorsqu'un cas exceptionnel se produit.

6. Procédé selon la revendication 5, dans lequel les informations comprennent au moins l'un parmi des paquets bruts de GOOSE, des informations de Dispositif Electronique Intelligent (DEI), des informations de bloc de contrôle de GOOSE, un ensemble de données de GOOSE, un événement de GOOSE de séquence et le résultat du diagnostic.

7. Procédé selon la revendication 1 ou 2, dans lequel le système de contrôle de processus est choisi dans un groupe constitué d'un Système d'Automatisation de Sous-station, d'une centrale hydroélectrique, d'un système éolien et d'un système de ressources énergétiques distribuées.

8. Appareil de diagnostic pour la logique d'une application distribuée d'un système de contrôle de processus, dans lequel l'application distribuée est mise en oeuvre sur base d'un Evénement de Sous-station Orienté sur un Objet Générique, GOOSE, l'appareil comprenant:
un moyen de création configuré pour créer au moins un module de diagnostic logique (S202) sur base d'un modèle de données pour l'application distribuée;
un moyen d'obtention configuré pour obtenir des informations de signal de GOOSE (S203); et
un moyen d'exécution configuré pour exécuter l'au moins un module de diagnostic logique (S204) sur base des informations de signal de GOOSE,
**caractérisé en ce que** le moyen d'obtention comprend:
un moyen de capture configuré pour capturer des paquets de GOOSE en ligne (S2031) sur un réseau dans le système de contrôle de processus pour obtenir les informations de signal de GOOSE; ou
un moyen de réception configuré pour recevoir des paquets de GOOSE enregistrés hors ligne (S2032) du système de contrôle de processus pour obtenir les informations de signal de GOOSE.

9. Appareil selon la revendication 8, dans lequel l'au moins un module de diagnostic logique est mis en oeuvre comme un script ou comme un Contrôleur Logique Programmable (PLC), et le modèle de données est obtenu à partir du ou des fichiers de description de configuration du système de contrôle de processus.

10. Appareil selon la revendication 8 ou 9, dans lequel le moyen d'exécution comprend:
un moyen d'attribution configuré pour attribuer les informations de signal de GOOSE au modèle de données ou à l'au moins un module de diagnostic logique.

11. Appareil selon la revendication 8 ou 9, dans lequel le moyen d'exécution est en outre configuré pour:
exécuter manuellement ou automatiquement l'au moins un module de diagnostic logique par cycle ou un déclencheur d'événement de GOOSE pendant un test ou une mise en marche ou un fonctionnement du système de contrôle de processus.

12. Système de diagnostic pour la logique d'une application distribuée d'un système de commande de processus, dans lequel l'application distribuée est mise en oeuvre sur base de l'Evénement de Sous-station Orienté sur un Objet Générique, GOOSE, le système comprenant au moins un processeur et au moins une mémoire comportant des instructions de programme d'ordinateur adaptées pour réaliser le procédé selon l'une quelconque des revendications 1 à 7.

13. Produit de programme d'ordinateur de diagnostic pour la logique d'une application distribuée d'un système de contrôle de processus, dans lequel l'application distribuée est mise en oeuvre sur base de l'Evénement de Sous-Station Orienté sur un Objet Générique, GOOSE, le produit de programme d'ordinateur comprenant au moins un support de mémoire lisible par ordinateur stockant des instructions de programme lisibles par ordinateur, les instructions de programme lisibles par ordinateur comprenant des instructions de programme adaptées pour mettre en oeuvre le procédé selon l'une quelconque des revendications 1 à 7.
